# EUROPEAN PATENT SPECIFICATION

(11) **EP 3 249 277 B1**
(45) Date of publication and mention of the grant of the patent: **06.11.2019**
(21) Application number: 17275077.0
(22) Date of filing: 26.05.2017
(51) Int. Cl.: F16L 41/08, F16L 41/00

(54) **LATERAL PIPE ADAPTOR**
ADAPTER FÜR LATERALES ROHR
ADAPTATEUR DE TUYAUX LATÉRAL

(30) Priority: 27.05.2016 GB 201609385
(43) Date of publication of application: 29.11.2017
(73) Proprietor: Flex-Seal Couplings Limited, Barnsley, South Yorkshire S73 0UW (GB)
(72) Inventor: BEATSON, Ben, Barnsley, South Yorkshire S73 0UW (GB)
(74) Representative: Wilson Gunn

(56) References cited:
- EP-A1- 0 786 618
- DE-U1- 29 708 509
- GB-A- 2 323 904
- US-A- 6 113 156

## Description

### Technical Field of the Invention

The present invention relates to a lateral pipe adaptor. In particular, the present invention relates to a lateral pipe adaptor for connecting into a clay or concrete pipe a smaller diameter lateral pipe.

### Background to the Invention

In many cases it is necessary to fit a new lateral pipe connection to an existing main pipe. One example would be the fitting of a new connection to a sewer pipe. Commonly, this is achieved by cutting a hole in the main pipe, fitting an adaptor into the hole and fitting the lateral pipe into the adaptor.

Examples of an existing system are described in DE 297 08 509 U1 or GB2323904. In these examples, the adaptor comprises a tubular elastomeric body with an integral socket at one end to receive a lateral pipe. An external plastics sleeve is captive on the body between the socket and an externally exposed portion of the body remote from the socket. The external plastics sleeve is provided with an external screw thread, upon which is threaded a plastic nut. An internal plastic sleeve is inserted into the body from the socket end after the externally exposed portion of the body has been inserted in a hole in a main pipe. The inner end of the internal plastic sleeve presses the externally exposed portion of the body into sealing engagement with the hole provided in the main pipe. The plastic nut is adjusted along the external plastics sleeve away from the socket and towards the main pipe to prevent the tubular elastomeric body projecting into the bore of the main pipe.

This produces a very reliable and secure connection between the main pipe and the lateral pipe. The fitting is however relatively bulky. Given that lateral pipes are typically fitted at locations far from workshops or warehouses, bulkier adaptors can be inconvenient to store and/or carry to the fitting location. Additionally, this form of adaptor requires careful adjustment of the nut in order to ensure that the exposed portion of the body does not project into the main pipe.

It is therefore an object of the present invention to provide a lateral pipe adaptor that at least partially overcomes or alleviates the above problems.

### Summary of the Invention

According to the present invention there is provided a lateral pipe adaptor as defined in claim 1.

The lateral pipe adaptor of the present invention is very simple to fit, readily providing a desired spacing between the head and the main pipe. The lateral pipe adaptor is also relatively small and lightweight.

The socket may be provided with an external clamping band. In particular, the socket may be provided with an external circumferential groove in which the external clamping band may be provided. In some embodiments there may be more than one external clamping band. In such embodiments, each band may be provided within a separate external circumferential groove.

The adjustable clamping band may comprise an elongate planar strip, the ends of the strip being connected by an adjustment means. Alternatively, the band may comprise two or more elongate strips connected together end to end by adjustment means at each connection. The adjustment means may have any suitable form. In particular, the adjustment means may comprise any of: screws, cams, lever devices, hydraulic devices, pneumatic devices, ratchets, threaded bolts, toggles, wedges or the like.

The socket may comprise one or more internal circumferential ribs. The ribs can enable a secure sealing attachment between the socket and the lateral pipe. The or each rib may be provided on the internal surface in a position substantially opposite the external circumferential groove for the clamping band.

The socket may be of larger bore than the tail. The body may have a step change in bore where the socket and the tail meet. The step change may define a shelf.

The internal support sleeve may be formed from a substantially rigid material. In particular, the internal support sleeve may be formed from materials including but not limited to: Acrylonitrile butadiene styrene (ABS), Medium-density polyethylene (MDPE), Polypropylene (PP) or the like.

The internal support sleeve may be substantially tubular. The flange may abut the shelf when the internal support sleeve is inserted into the tail. The internal support sleeve may be substantially tubular. The inner end of the internal support sleeve may have a substantially saddle form profile. This allows the inner end of the internal support sleeve to correspond to the curvature of the interior of the main pipe. The inner end of the internal support sleeve may be sloped towards the axis of the sleeve. This may ease insertion of the sleeve into the tail.

The flange of the internal support sleeve may be provided with an orientation indicator. The orientation indicator may be a raised or recessed symbol. The orientation indicator may be aligned with the saddle form of the inner end. In this manner, the inner support sleeve may be inserted into the tail an orientation that corresponds with the alignment of the main pipe.

The lateral pipe shear support sleeve may have a bore substantially matching the bore of the socket. In this manner, the lateral pipe shear support sleeve may increase the resistance of the lateral pipe adaptor to shear loads applied via the lateral pipe.

The inner end of the tail may have a substantially saddle form profile. This allows the inner end of the tail to correspond to the curvature of the interior of the main pipe.

The inner bore of the tail may reduce in diameter towards the inner end. This can be achieved by increasing the thickness of the elastomeric material forming the tail towards the inner end. This can increase the pressure exerted by the inner support sleeve on the tail at the inner end, thereby improving the seal between the tail and the hole in the main pipe.

The external support collar may have an outer end that abuts the shelf when the tail is inserted into the hole. The external support collar may have an inner end that abuts the exterior of the main pipe. In particular, the inner end of the external support collar may have a substantially saddle form. This allows the inner end of the support collar to correspond to the curvature of the exterior of the main pipe.

The external support collar may have a substantially frustoconical form, the diameter increasing from the outer end to the inner end. The outer end of the collar may be provided with an internal rim. The internal rim may project in a substantially direction substantially parallel to the axis of the collar and towards the inner end of the collar. The rim can help improve the engagement between the tail and the collar. In some embodiments, the tail may be provided with a corresponding external circumferential groove. Engagement between the rim and groove further secures the collar in position.

The external support collar may be formed from a substantially rigid material. In particular, the external support collar may be formed from materials including but not limited to: Acrylonitrile butadiene styrene (ABS), Medium-density polyethylene (MDPE), Polypropylene (PP) or the like.

The adaptor may be provided with one or more shims for fitting between the external support collar and the outer wall of the pipe. The use of one or more shims can prevent the tail projecting into the bore of the main pipe. In particular, such shims may be fitted when utilising the adaptor with a relatively small or relatively thin walled main pipe.

The one or more shims may have a substantially ring like form. The one or more shims may be formed from an elastomeric material. In particular, the one or more shims may be formed from materials including but not limited to: ethylene propylene diene monomer (EPDM), Polyvinyl chloride (PVC), Silicone, rubber or the like. This allows the or each shim to deform to correspond to the inner end of the support collar and/or the curvature of the exterior of the main pipe. In particular, the or each shim may deform to a substantially saddle like profile in use.

The one or more shims may have a groove provided on the surface of their outer end. The grove may be a V form groove. The groove may be of suitable dimensions to receive the inner end of the support collar. In this way, the inner end of the support collar engages with the groove on the shim to lock the shim and collar in position. This helps to prevent the shim and /or collar deforming and thus losing engagement.

The one or more shims may have a ridge provided upon the surface of their inner end. The ridge may complement the groove. In this manner, if multiple shims are used together the ridge on an outer shim engages with the groove on the inner shim to lock the shims in position.

### Detailed Description of the Invention

In order that the invention may be more clearly understood an embodiment/embodiments thereof will now be described, by way of example only, with reference to the accompanying drawings, of which:
- Figure 1: is an exploded view of a lateral pipe adaptor according to the present invention;
- Figure 2: is a cross-sectional view of the pipe adaptor of the present invention fitted to a relatively large diameter pipe with relatively thick walls;
- Figure 3: is a cross-sectional view of the pipe adaptor of the present invention fitted to a relatively small diameter pipe with relatively thin walls;
- Figure 4: is a perspective view (a) and a cross-sectional view (b) of the internal support sleeve of the lateral pipe adaptor of the present invention; and
- Figure 5: is a cross-sectional illustration of a shim according to the present invention.

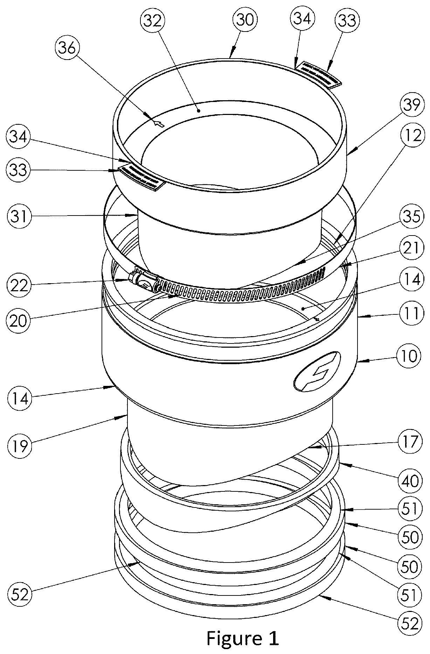

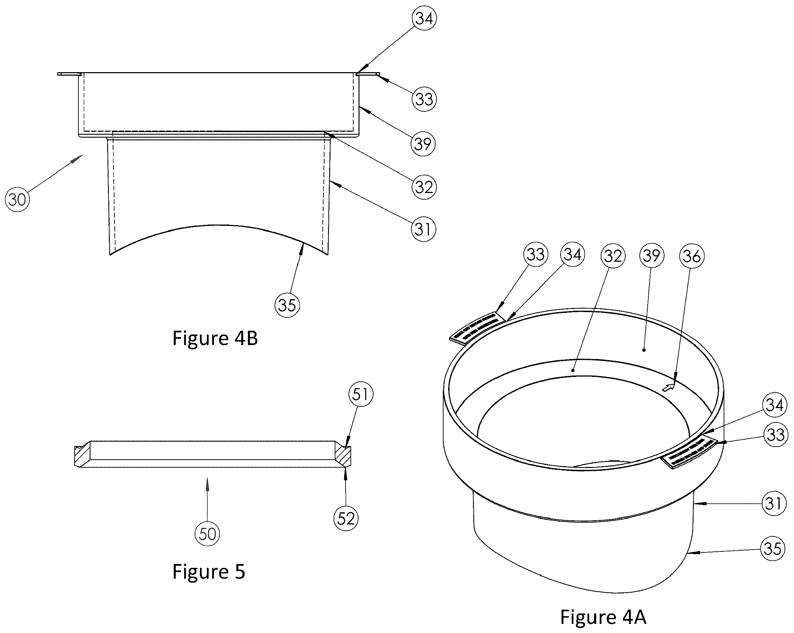

Turing now to figures 1-4, a lateral pipe adaptor 1 is used to connect a lateral pipe (not shown) to a hole 2 provided in a main pipe 3. The adaptor 1 comprises a substantially tubular body 10 formed from elastomeric material.

The body 10 comprises a socket 11 for receiving a lateral pipe and a tail 19 for insertion into a hole provided in a main pipe 3. The socket 10 has a bore corresponding to the outer diameter of the lateral pipe. The tail 19 has an exterior diameter corresponding to the diameter of the hole provided in the main pipe 3.

The interior of the socket 11 is provided with a pair of circumferential ribs 12, to aid in gripping and retaining the lateral pipe once inserted. The socket 11 is further provided with a circumferential groove 13 on its exterior surface. The groove 13 is provided in a position substantially opposite the ribs 12. Within the groove 13 is provided a clamping band 20 comprising an elongate planar strip 21, the ends of the strip 21 being connected by an adjustment means 22. Adjustment of the attachment means 22 allows the band 20 to be tightened so as to aid in gripping and retaining the lateral pipe within the socket 11.

Between the inner end of the socket 11 and the outer end of the tail 19 is provided a shelf 14. The shelf 14 thus provides an end stop for the insertion of the lateral pipe into the socket 11.

The tail 19 has a substantially cylindrical outer surface with the exception of a groove 18 at the outer end. The groove is preferably provided directly adjacent to the shelf 14.

The inner bore of the tail 19 narrows towards its inner end 17. This is due to the walls 16 of the tail increasing in thickness towards the inner end 17. The inner end 17 of the tail has a saddle like form. Accordingly, the inner end 17 can match the curvature of the interior of the pipe 3 if the body 10 is inserted into the hole 2 in the correct orientation. In some embodiments, this orientation is judged by eye before inserting the body 10. In other embodiments, it is possible to provide one or more surface indications on the tail 19 or socket 11 such that orientation can be checked or adjusted after insertion.

The adaptor 1 is provided with an internal support sleeve 30. The internal support sleeve 30 is formed from a substantially rigid material, typically a plastic. The internal support sleeve 30 has substantially tubular body 31 and a flange 32 is provided around its outer end. A lateral pipe shear support sleeve 39 projects outward from the edges of flange 32. The exterior diameter of the lateral pipe shear support sleeve 39 may substantially match or be smaller than the inner bore of the socket 11.

In some embodiments, the support sleeve 30 may be provided with removable tabs 33. The tabs 33 may be connected to lateral pipe shear support sleeve 39 (or if such a feature is not present to the flange 32) by a thinned or partially cut line 34, such that a user can snap the tabs off the sleeve 30 before fitting.

The inner end 35 of the tubular body 31 has a saddle like form. Accordingly, the inner end 35 can match the curvature of the interior of the pipe 3 and/or the curvature of the inner end 17 of tail 19, if the tubular body 31 is inserted in the correct orientation. In some embodiments, this orientation is judged by eye before inserting the tubular body 31. In other embodiments, it is possible to provide one or more surface indications 36 on the flange 32 such that orientation can be checked or adjusted after insertion.

The adaptor 1 is provided with an external support collar 40. The external support collar 40 is formed from a substantially rigid material, typically a plastic. The external support collar 40 has a substantially frustoconical body 41, increasing in diameter towards the inner end 45 of the frustoconical body 41. The external support collar further comprises an inner rim 42, provided at an outer end 43 of the collar 40. The rim 42 projects in a direction substantially parallel to the axis of the collar 40 and towards the inner end 45 of the collar. The rim 42 terminates in an abutting surface 44.

The inner end 45 of the frustoconical body 41 has a saddle like form. Accordingly, the inner end 45 can match the curvature of the exterior of the pipe 3. In some embodiments, the external support collar 40 may rest directly on the exterior or the pipe 3. In other embodiments, one or more shims 50 may be inserted between the inner end 45 of the collar 40 and the exterior of the main pipe 3. The shims 50 are each formed from an elastomeric material and have a ring form. As such, each shim 50 can deform to match the curvature of the exterior of the pipe 3 under pressure from the inner end 45 and/or an additional shim 50. The shims 50 are optionally formed with a V groove 51 on their outer end and a corresponding ridge 52 on their inner end. The groove 51 can help promote engagement with the inner end 45 of the collar 40. The ridge is adapted to engage with the groove 51 when multiple shims 50 are used without unduly impacting engagement between the inner most shim 50 and the pipe 3.

In use, a hole 2 is cut in the main pipe 3 by a suitable tool. The tail 19 of body 10 is inserted into the external support collar 40. The collar 40 is orientated such that the saddle form of the inner end 45 matches the saddle form of the inner end 17 of tail 19. Insertion is halted when the shelf 14 abuts the outer end 43 of the collar 40.

Depending upon the diameter of the pipe 3 and/or the thickness of the walls of the pipe 3, one or more shims 50 may also be provided around the tail 19. The shims 50 are positioned such that inner end 45 of the support collar 40 abuts the outer end 51 of the outermost shim 50. The use of shims 50 provide additional spacing to prevent the tail 19 projecting into the bore of pipe 3.

The inner end 17 of tail 19 of body 10 is inserted into hole 2. Ultimately, insertion is halted when the inner end 45 of support collar 40 is firmly pressed against the surface of pipe 3 around hole 2 or, where one or more shims 50 are provided, where the inner end 52 of the innermost shim 50 is firmly pressed against the surface of pipe 3 around hole 2.

The body 10 is orientated such that the saddle form or the inner end 17 of tail 19 matches the interior of the pipe 3. In this manner, the tail 19 can form a good seal around the edges of the hole 2 without projecting into the bore of the pipe 3.

The internal support sleeve 30 is inserted into the body 10 after the tail 19 is inserted into the hole 2 provided in main pipe 3. To aid insertion, the inner end 35 of the sleeve 30 may be sloped towards the axis of the tubular body 31. The tubular body 31 fits within the tail 19, the flange 32 abutting the shelf 14. The interaction between the shelf 14 and flange 32 limits how far the sleeve 30 can be inserted into the tail 19.

Once inserted, the internal support sleeve 30 presses on the walls 16 of tail 19. This in turn presses the walls 16 against the edges of the hole 2 and thus provides a secure engagement and a watertight seal. The engagement and seal is further improved by towards the inside of the hole by the thicker inner ends of walls 16.

The pressing of the internal support sleeve 30 on tail 19 also presses the outer part of the tail against the external support collar 40 (and any shims 50). This creates a secure engagement between the tail 19 and the collar 40. The pressing of the internal support sleeve further urges the inner rim 42 of the collar 40 into the groove 18. This locks the collar 40 and body 10 in position.

The internal support sleeve 30 is orientated such that the saddle form of the inner end 35 matches the interior of the pipe 3. In this manner, the internal support sleeve 30 can fit within the tail 19 without projecting into the bore of the pipe 3.

Once the adapter 1 is fitted, a lateral pipe (not shown) is inserted into the socket 11 and the lateral pipe shear support sleeve 39. The lateral pipe is inserted unit it abuts the flange 32 of the internal support sleeve 30. Subsequently, the clamping band 20 is tightened using adjustment means 22 to provide a secure sealed engagement between the socket 11 and the exterior of the lateral pipe. The lateral pipe shear support sleeve 39 has a size selected such that it does not interfere with the sealed engagement formed on the lateral pipe by use of the clamping band 20.

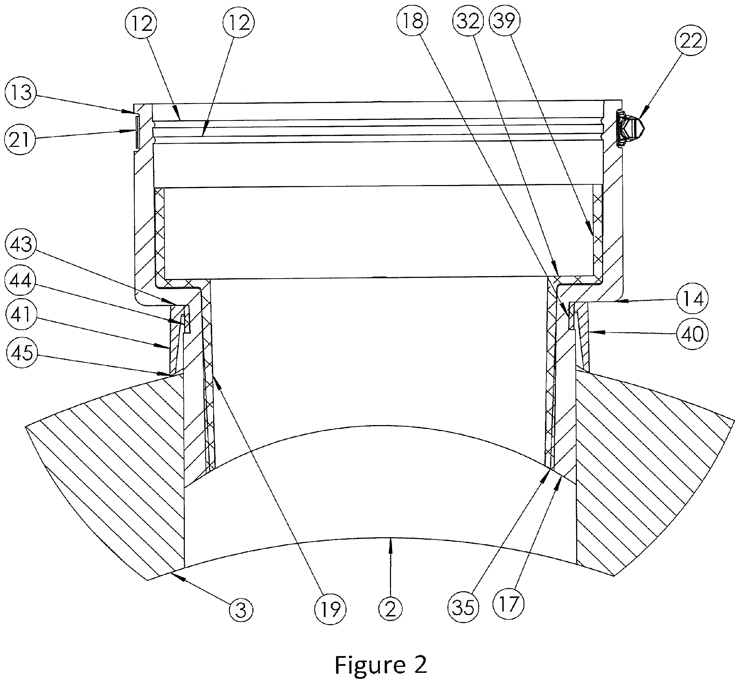

Turning specifically to figure 2, an example of the adaptor 1 fitted to main pipe with relatively thick walls and a relatively large diameter is shown. For instance, this may be a concrete pipe of, say, 600mm diameter. In this example, no shims 50 are required, as the tail 19 does not project into the bore of the pipe 3.

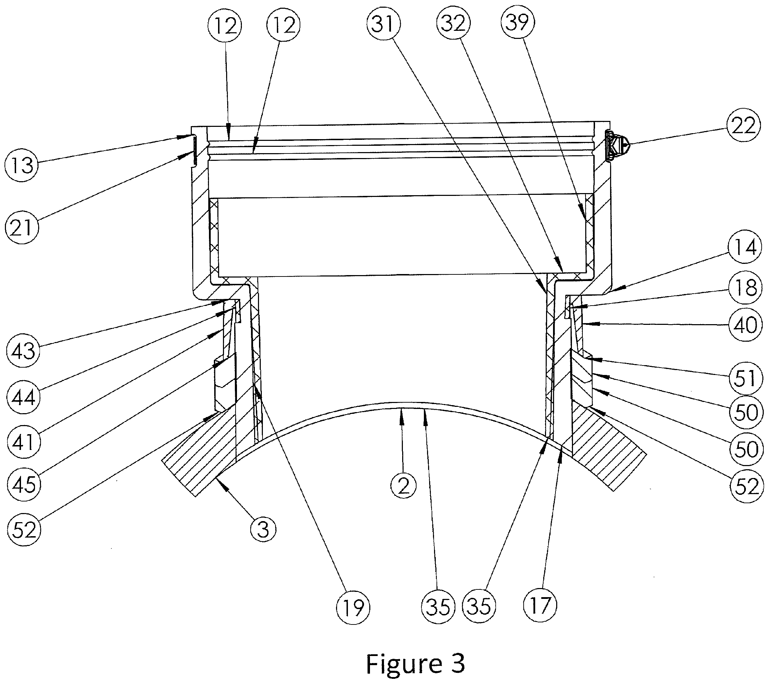

Turning specifically to figure 3, an example of the adaptor 1 fitted to main pipe with relatively thin walls and a relatively small diameter is shown. For instance, this may be a clay pipe of, say, 300mm diameter. In this example, two shims 50 are required, to increase the spacing between the socket 11 and the exterior of pipe 3 so that the tail 19 does not project into the bore of the pipe 3.

The above embodiments are described by way of example only. Many variations are possible without departing from the scope of the invention as defined in the appended claims.

## Claims

1. A lateral pipe adaptor (1) comprising: a tubular elastomeric body (10) having a longitudinal axis , the body (10) having at one axial outer end a socket (11) adapted for receiving a lateral pipe, and, at the other axial inner end, a tail (19) adapted for insertion into a hole (2) provided in a main pipe (3); an internal support sleeve (30) adapted for insertion into the tail (19) so as to press the external surface of the tail (19) into sealing engagement with the hole (2); and an external support collar (40) operable to fit between the socket (11) and the outer wall of the pipe (3) and thereby prevent the tail (19) projecting into the bore of the main pipe (3); wherein the internal support sleeve (30) is provided with a circumferential flange (32) at an axial outer end of the tail in an assembled state of the adaptor (1); and **characterised in that** the internal support sleeve (30) comprises a lateral pipe shear support sleeve (39) projecting axially outwards from the flange (32) in an assembled state of the adaptor (1).

2. A lateral pipe adaptor (1) as claimed in claim 1 wherein the socket (11) is of larger bore than the tail (19) and the body (10) has a step change in bore defining a shelf (14) where the socket (11) and the tail (19) meet.

3. A lateral pipe adaptor (1) as claimed in any preceding claim wherein the internal support sleeve (30) is substantially tubular.

4. A lateral pipe adaptor (1) as claimed in any preceding claim wherein the internal support sleeve (30) is provided with an orientation indicator.

5. A lateral pipe adaptor (1) as claimed in any preceding claim wherein the inner bore of the tail (19) reduces in diameter towards the inner end (17) due to an increase in the thickness of the elastomeric material forming the tail (19) towards the inner end (17).

6. A lateral pipe adaptor (1) as claimed in any preceding claim when dependent on claim 2 wherein the external support collar (40) has an outer end (43) that abuts the shelf (14) when the tail (19) is inserted into the hole.

7. A lateral pipe adaptor (1) as claimed in any preceding claim wherein the external support collar (40) has a substantially frustoconical form, the diameter increasing from the outer end (43) to the inner end (45).

8. A lateral pipe adaptor (1) as claimed in claim 7 wherein the outer end (43) of the collar (40) is provided with an internal rim (42), the internal rim (42) projecting in a direction substantially parallel to the axis of the collar (40) and towards the inner end (45) of the collar (40).

9. A lateral pipe adaptor (1) as claimed in claim 8 wherein the tail (19) is provided with an external circumferential groove (13) corresponding to the rim (42) such that engagement between the rim (42) and groove (13) further secures the collar (40) in position.

10. A lateral pipe adaptor (1) as claimed in any preceding claim wherein the adaptor (1) is provided with one or more shims (50) for fitting between the external support collar (40) and the outer wall of the pipe (3).

11. A lateral pipe adaptor (1) as claimed in claim 10 wherein the one or more shims (50) have a groove (51) provided on the surface of their outer end.

12. A lateral pipe adaptor (1) as claimed in claim 10 or claim 11 wherein the one or more shims (50) have a ridge provided upon the surface of their inner end (52).

13. A lateral pipe adaptor (1) as claimed in any one of claims 10-12 wherein the one or more shims (50) have a substantially ring like form.

14. A lateral pipe adaptor (1) as claimed in any one of claims 10-13 wherein the one or more shims (50) are formed from an elastomeric material.

## Patentansprüche

1. Adapter (1) für ein Seitenrohr aufweisend: einen rohrförmigen Elastomerkörper (10) mit einer longitudinalen Achse, wobei
der Körper (10) an einem axialen äußeren Ende eine Aufnahme (11), welcher ausgestaltet zur Aufnahme eines Seitenrohres ist und an dem anderen axialen Ende einen Fortsatz hat, ausgestaltet zum Einsetzen in ein Loch (2) ist, welches in einem Hauptrohr (3) vorgesehen ist;
eine interne Stützhülse (30), welche ausgestaltet ist um in den Fortsatz (19) eingesetzt zu werden, um die externe Oberfläche des Fortsatzes (19) in einen Dichteingriff mit dem Loche (2) zu bringen; und
einen externen Stützkragen (40), bedienbar, um zwischen die Aufnahme (11) und die äußere Wand des Rohres (3) zu passen und dabei zu verhindern, dass der Fortsatz (19) in die Bohrung des Hauptrohres (3) hineinragt;
wobei die interne Stützhülse (30) mit einem umlaufenden Flansch (32) an einem axialen äußeren Ende des Fortsatzes in einen zusammengebauten Status des Adapters (1) ausgestaltet ist; und
**dadurch gekennzeichnet,**
**dass** die interne Stützhülse (30) eine Seitenrohrscherstützhülse (38) aufweist, welche axial auswärts von dem Flansch (32) im zusammengesetzten Zustand des Adapters (1) vorsteht.

2. Adapter (1) für ein Seitenrohr nach Anspruch 1, wobei die Aufnahme (11) eine größere Bohrung ist als der Fortsatz (19) ist und der Körper (10) eine stufenweise Änderung der Bohrung aufweist, die einen Boden definiert, indem sich die Aufnahme (11) und der Fortsatz (19) treffen.

3. Adapter (1) für ein Seitenrohr nach einem der vorhergehenden Ansprüche, wobei die interne Stützhülse (30) im Wesentlichen rohrförmig ist.

4. Adapter (1) für ein Seitenrohr nach einem der vorangehenden Ansprüche, wobei die interne Stützhülse (30) mit einer Orientierungsanzeige versehen ist.

5. Adapter (1) für ein Seitenrohr nach einem der vorangehenden Ansprüche, wobei die innere Bohrung des Fortsatzes (19) im Durchmesser in Richtung des inneren Endes (17) aufgrund einer Erhöhung der Dicke des elastomeren Materials, welches den Fortsatz (19) ausbildet, in Richtung des inneren Endes (17) zunimmt.

6. Adapter (1) für ein Seitenrohr nach einem der vorangehenden Ansprüche, sofern abhängig von Anspruch 2, wobei der externe Stützkragen (40) ein äußeres Ende (43) hat, das an dem Boden (14) anliegt, wenn der Fortsatz (19) in das Loch eingesetzt ist.

7. Adapter (1) für ein Seitenrohr nach einem der vorangehenden Ansprüche, wobei der externe Stützkragen (40) im Wesentlichen eine kegelstumpfförmige Form aufweist, wobei der Durchmesser sich vom äußeren Ende (43) zum inneren Ende (45) vergrößert.

8. Adapter (1) für ein Seitenrohr nach Anspruch 7, wobei das äußere Ende (43) des Stützkragens (40) mit einer inneren Kante (42) versehen ist, wobei die innere Kante (42) in eine Richtung im Wesentlichen parallel zur Achse des Stützkragens (40) und in Richtung des inneren Endes (45) des Kragens (40) hervorsteht.

9. Adapter (1) für ein Seitenrohr nach Anspruch 8, wobei der Fortsatz (19) mit einer externen umlaufenden Nut (13) ausgestaltet ist, welche mit der Kante (42) korrespondiert, so dass der Eingriff zwischen der Kante (42) und der Nut (13) den Kragen (40) weiter in der Position sichert.

10. Adapter (1) für ein Seitenrohr nach einem der vorangehenden Ansprüche, wobei der Adapter (1) mit einer oder mehrerer Scheiben (50) zum Anpassen zwischen dem externen Stützkragen (40) und der äußeren Wand des Rohres (3) ausgestaltet ist.

11. Adapter (1) für ein Seitenrohr nach Anspruch 10, wobei die eine oder mehrere Scheiben (50) eine Nut (51) auf der Oberfläche ihres äußeren Endes aufweisen.

12. Adapter (1) für ein Seitenrohr nach Anspruch 10 oder 11, wobei die eine oder mehreren Scheiben (50) eine Erhöhung aufweisen, welche auf ihrer inneren Endfläche (52) vorgesehen ist.

13. Adapter (1) für ein Seitenrohr nach einem der Ansprüche 10 bis 12, wobei die eine oder mehreren Scheiben (50) im Wesentlichen eine ringähnliche Form haben.

14. Adapter (1) für ein Seitenrohr nach einem der Ansprüche 10 bis 13, wobei die eine oder mehreren Scheiben (50) aus einem Elastomermaterial ausgebildet sind.

## Revendications

1. Adaptateur (1) de tuyau latéral, comprenant un corps (10) tubulaire élastomère ayant un axe longitudinal, le corps (10) ayant, à une extrémité extérieure axialement, une douille (11) propre à recevoir un tuyau latéral et, à l'autre extrémité axialement, une queue (19) propre à être insérée dans un trou (2) prévu dans un tuyau (3) principal, un manchon (30) support intérieur propre à être inséré dans la queue (19), de manière à presser la surface extérieure de la queue (19) en coopération d'étanchéité avec le trou (2), et un collet (40) de support extérieur pouvant fonctionner pour s'adapter entre la douille (11) et la paroi extérieure du tuyau (3) et empêcher ainsi la queue (19) de faire saillie dans l'alésage du tuyau (3) principal, le manchon (30) de support intérieur étant pourvu d'un rebord (32) circonférentiel à une extrémité extérieure radialement de la queue, lorsque l'adaptateur (1) est à l'état monté ; et **caractérisé en ce que** le manchon (30) de support intérieur comprend un manchon (39) de support de cisaillement de tuyau latéral faisant saillie axialement vers l'extérieur du rebord (32), lorsque l'adaptateur (1) est à l'état monté.

2. Adaptateur (1) de tuyau latéral suivant la revendication 1, dans lequel la douille (11) a un diamètre plus grand que la queue (19) et le corps (10) a un changement en gradin de diamètre définissant un épaulement (14) où la douille (11) et la queue (19) se rencontrent.

3. Adaptateur (1) de tuyau latéral suivant l'une quelconque des revendications précédentes, dans lequel le manchon (30) de support intérieur est sensiblement tubulaire.

4. Adaptateur (1) de tuyau latéral suivant l'une quelconque des revendications précédentes, dans lequel le manchon (30) de support intérieur est pourvu d'un indicateur d'orientation.

5. Adaptateur (1) de tuyau latéral suivant l'une quelconque des revendications précédentes, dans lequel le diamètre intérieur de la queue (19) se réduit vers l'extrémité (17) intérieure, en raison d'une augmentation de l'épaisseur du matériau élastomère formant la queue (19) vers l'extrémité (17) intérieure.

6. Adaptateur (1) de tuyau latéral suivant l'une quelconque des revendications précédentes lorsqu'elle dépend de la revendication 2, dans lequel le collet (40) de support extérieur a une extrémité (43) extérieure, qui bute sur l'épaulement (14), lorsque la queue (19) est insérée dans le trou.

7. Adaptateur (1) de tuyau latéral suivant l'une quelconque des revendications précédentes, dans lequel le collet (40) de support extérieur a une forme sensiblement tronconique, le diamètre augmentant de l'extrémité (43) extérieure à l'extrémité (45) intérieure.

8. Adaptateur (1) de tuyau latéral suivant la revendication 7, dans lequel l'extrémité (43) extérieure du collet (40) est pourvue d'un rebord (42) intérieur, le rebord (42) intérieur faisant saillie dans une direction sensiblement parallèle à l'axe du collet (40) et vers l'extrémité (45) intérieure du collet (40).

9. Adaptateur (1) de tuyau latéral suivant la revendication 8, dans lequel la queue (19) est pourvue d'une rainure (13) circonférentielle extérieure correspondant au rebord (42), de manière à ce que la coopération entre le rebord (42) et la rainure (13) fixe encore le collet (40) en position.

10. Adaptateur (1) de tuyau latéral suivant l'une quelconque des revendications précédentes, dans lequel l'adaptateur (1) est pourvu d'une ou plusieurs cales (50) d'adaptation entre le collet (40) de support extérieur et la paroi extérieure du tuyau (3).

11. Adaptateur (1) de tuyau latéral suivant la revendication 10, dans lequel les une ou plusieurs cales (50) ont une rainure (51) prévue sur la surface de leur extrémité extérieure.

12. Adaptateur (1) de tuyau latéral suivant la revendication 10 ou la revendication 11, dans lequel la une ou les plusieurs cales (50) ont une rainure prévue sur la surface de leur extrémité (52) intérieure.

13. Adaptateur (1) de tuyau latéral suivant l'une quelconque des revendications 10 à 12, dans lequel la une ou les plusieurs cales (50) sont sensiblement de forme annulaire.

14. Adaptateur (1) de tuyau latéral suivant l'une quelconque des revendications 10 à 13, dans lequel la une ou les plusieurs cales (50) sont en un matériau élastomère.
